Europäisches Patentamt

European Patent Office

Office européen des brevets

(19)

(11) Veröffentlichungsnummer: **0 212 351
B1**

(12) **EUROPÄISCHE PATENTSCHRIFT**

(45) Veröffentlichungstag der Patentschrift:
**10.01.90**

(51) Int. Cl.⁴: **G 21 C 3/06**

(21) Anmeldenummer: **86110396.8**

(22) Anmeldetag: **28.07.86**

(54) **Brennstab für ein Kernreaktorbrennelement.**

(30) Priorität: **08.08.85 DE 3528545**

(43) Veröffentlichungstag der Anmeldung:
**04.03.87 Patentblatt 87/10**

(45) Bekanntmachung des Hinweises auf die Patenterteilung:
**10.01.90 Patentblatt 90/2**

(84) Benannte Vertragsstaaten:
**DE FR GB SE**

(56) Entgegenhaltungen:
**CH-A- 387 180
FR-A- 1 537 960
FR-A- 2 317 372
FR-A- 2 509 510
FR-A- 2 538 940
LU-A- 53 851
US-A- 3 620 691**

(73) Patentinhaber: **Siemens Aktiengesellschaft,
Wittelsbacherplatz 2, D-8000 München 2 (DE)**

(72) Erfinder: **Stehle, Heinz, Dr., Schulstrasse 2,
D-8525 Marloffstein (DE)**
Erfinder: **Weidinger, Hans, Dr., Danziger Strasse 22,
D-8500 Nürnberg (DE)**
Erfinder: **Steinberg, Eckard, Dipl.-Ing. (FH), Mistelweg 8,
D-8520 Erlangen (DE)**

## Beschreibung

Die Erfindung betrifft einen Brennstab für ein Kernreaktorbrennelement entsprechend dem Oberbegriff des Patentanspruchs.

Derartige Brennstäbe sind bereits üblich (FR-A-1 537 960). Sie werden in das Skelett des Kernreaktorbrennelementes eingebaut. Dieses Kernreaktorbrennelement wird schließlich in einen Kernreaktor eingesetzt, in dem es beispielsweise mit Leichtwasser gekühlt wird. In diesem Kernreaktor haben die Zirkoniumlegierungen der Hüllrohre einen verhältnismäßig geringen Einfangsquerschnitt für thermische Neutronen.

An der Außenseite der Hüllrohre der Brennstäbe findet während des Betriebes im Kernreaktor eine Korrosion statt, die die Einsatzfähigkeit des Kernreaktorbrennelementes im Kernreaktor zeitlich begrenzt. Die üblichen Einsatzzeiten sind drei bis vier Jahre.

Der Erfindung liegt die Aufgabe zugrunde, die Einsatzfähigkeit solcher Kernreaktorbrennelemente zu verbessern und ihre Einsatzzeiten im Kernreaktor zu verlängern.

Zur Lösung dieser Aufgabe hat ein Brennstab der eingangs erwähnten Art erfindungsgemäß die Merkmale des kennzeichnenden Teiles des Patentanspruchs.

Die Erfindung beruht auf der Erkenntnis, daß die Zirkoniumlegierung, aus der die Oberflächenschicht auf der Außenseite des Hüllrohres dieses Brennstabes besteht, korrosionsbeständiger ist als die Zirkoniumlegierung, aus der der Rest der Hüllrohres besteht. Ferner ist zwar der Einfangsquerschnitt von Vanadium, Platin und Kupfer für thermische Neutronen verhältnismäßig groß, da die drei genannten Legierungsbestandteile aber nur in der verhältnismäßig dünnen Oberflächenschicht des Hüllrohres vorhanden sind, sind die Absorptionsverluste an thermischen Neutronen im Kernreaktor durch die Hüllrohre dennoch verhältnismäßig gering.

Versuche in einem Autoklaven zeigten, daß die Korrosionsgeschwindigkeit eines Probekörpers aus einer Zirkoniumlegierung mit 0.5 Gew.-% Eisen und 0.25 Gew.-% Vanadium als Legierungsbestandteile in Wasserdampf nur ein Zehntel der Korrosionsgeschwindigkeit eines Probekörpers aus einer Zirkoniumlegierung mit der Warenbezeichnung Zircaloy 4 unter gleichen Bedingungen beträgt, die neben dem Zirkonium als weitere Legierungsbestandteile 1.2 bis 1.7 Gew.-% Zinn, 0.18 bis 0.24 Gew.-% Eisen, 0.07 bis 0.13 Gew.-% Chrom und 0.1 bis 0.16 Gew.-% Sauerstoff enthält und in der die Summe der Gewichtsprozente der Legierungsbestandteile Eisen und Chrom im Bereich von 0.28 bis 0.37 Gew.-% liegt. Die Einsatzzeit eines Kernreaktorbrennelementes mit erfindungsgemäßen Brennstäben in einem Kernreaktor kann also mindestens um 1 Jahr länger sein als die eines Kernreaktorbrennelementes mit Brennstäben, deren Hüllrohre beispielsweise auch an der Außenseite aus Zircaloy 4 bestehen.

Zum Herstellen eines Hüllrohres für einen erfindungsgemäßen Brennstab wird vorteilhafterweise von einem Rohrrohling ausgegangen, der ein Innenrohr beispielsweise aus Zircaloy 4 und ein auf diesem Innenrohr sitzendes Außenrohr aus der Zirkonium-Vanadium-Eisen-Legierung mit 0.5 Gew.-% Eisen und 0.25 Gew.-% Vanadium aufweist. Dieser Rohrrohling wird auf eine Temperatur im Bereich von 500°C bis 700°C aufgewärmt und dann strangverpreßt. Hierbei ergibt sich eine metallurgische Verbindung zwischen den beiden Zirkoniumlegierungen.

Durch anschließendes Pilgern des rohrförmigen Preßlings wird schließlich das endgültige Hüllrohr für den Brennstab gewonnen, welches beispielsweise einen Durchmesser von 10.7 mm und eine Wandstärke von 0.72 mm haben kann. Die Oberflächenschicht aus der vanadiumhaltigen Zirkoniumlegierung bedeckt die gesamte Außenseite diese Hüllrohres und kann beispielsweise 0.1 mm dick sein. Eine Pilgermaschine ist z.B. in der US-A-4 233 834 beschrieben.

## Patentanspruch

Brennstab für ein Kernreaktorbrennelement mit Kernbrennstoff, der sich in einem Hüllrohr befindet, welches aus einer Zirkoniumlegierung mit den Legierungsbestandteilen 1.2 bis 1.7 Gew.-% Zinn, 0.07 bis 0.2 Gew.-% Eisen, 0.05 bis 0.15 Gew.-% Chrom, 0.03 bis 0.08 Gew.-% Nickel, 0.07 bis 0.15 Gew.-% Sauerstoff und mit der Gew.-%-Summe für die Legierungsbestandteile Eisen, Chrom und Nickel im Bereich von 0.18 bis 0.38 Gew.-% oder mit den Legierungsbestandteilen 1.2 bis 1.7 Gew.-% Zinn, 0.18 bis 0.24 Gew.-% Eisen, 0.07 bis 0.13 Gew.-% Chrom, 0.10 bis 0.16 Gew.-% Sauerstoff und mit der Gew.-%-Summe für die Bestandteile Eisen und Chrom im Bereich von 0.28 bis 0.37 Gew.-% besteht und auf der Außenseite eine Oberflächenschicht aus einer anderen Zirkoniumlegierung aufweist, dadurch gekennzeichnet, daß die Oberflächenschicht eine Schichtdicke im Bereich von 5 bis 20% der gesamten Wandstärke des Hüllrohres hat sowie 0 bis 1 Gew.-% Eisen als Legierungsbestandteil und mindestens ein Legierungsbestandteil aus der Gruppe Vanadium, Platin und Kupfer aufweist mit einem Vanadiumgehalt von 0.1 bis 1 Gew.-%, einem Platingehalt von 0.1 bis 1 Gew.-% und einem Kupfergehalt von 1 bis 3 Gew.-%.

## Claim

Fuel rod for a nuclear reactor fuel element with nuclear fuel which is located in a jacket encasing tube which consists of a zirconium alloy with the alloying components 1.2 to 1.7% by weight tin, 0.07 to 0.2% by weight iron, 0.05 to 0.15% by weight chromium, 0.03 to 0.08% by weight nickel, 0.07 to 0.15% by weight oxygen and with a % by weight total for the alloying components iron, chromium and nickel being in the region of 0.18 to 0.38% by weight or with the alloying components 1.2 to 1.7% by weight tin, 0.18 to 0.24% by weight iron, 0.07 to 0.13% by weight chromium, 0.10 to 0.16% by weight oxygen and with the % by weight total for the components iron and chromium in the region of 0.28 to 0.37% by weight and has on the outer side a surface layer of another zirconium alloy, characterised in that the surface layer has a layer thickness in the region of 5 to 20% of the whole wall thickness of the jacket encasing tube as well as 0 to 1% by weight iron as alloying component and at least one alloying component of the group vanadium, platinum, and copper with a vanadium content of 0.1 to 1% by weight, a platinum content of 0.1 to 1% by weight and a copper content of 1 to 3% by weight.

**Revendications**

Crayon combustible d'un assemblage combustible de réacteur nucléaire, ayant une matière combustible nucléaire qui se trouve dans une gaine, laquelle est constituée d'un alliage de zirconium ayant comme constituants de l'alliage de 1,2 à 1,7% en poids d'étain, de 0,07 à 0,2% en poids de fer, de 0,05 à 0,15 en poids de chrome, de 0,03 à 0,08% en poids de nickel, de 0,07 à 0,15% en poids d'oxygène, la somme des pourcentages en poids des constituants de l'alliage que sont le fer, le chrome et le nickel étant comprise entre 0,18 et 0,38% en poids, ou ayant comme constituants de l'alliage de 1,2 à 1,7% en poids d'étain, de 0,18 à 0,24% en poids de fer, de 0,07 à 0,13% en poids de chrome, de 0,10 à 0,16% en poids d'oxygène, la somme des pourcentages en poids des constituants que sont le fer et le chrome étant comprise entre 0,28 et 0,37% et comportant, du côté extérieur, une couche superficielle en un alliage de zirconium différent, caractérisé en ce que la couche superficielle a une épaisseur représentant de 5 à 25% de l'épaisseur totale de la paroi de la gaine et contient de 0 à 1% en poids de fer comme constituant de l'alliage et au moins un constituant de l'alliage choisi dans le groupe constitué du vanadium, du platine et du cuivre, avec une teneur en vanadium de 0,1 à 1% en poids, une teneur en platine de 0,1 à 1% en poids et une teneur en cuivre de 1 à 3% en poids.